# EUROPÄISCHE PATENTSCHRIFT

(11) **EP 3 222 782 B1**
(45) Veröffentlichungstag und Bekanntmachung des Hinweises auf die Patenterteilung: **08.09.2021**
(21) Anmeldenummer: 17162318.4
(22) Anmeldetag: 13.11.2013
(51) Int. Cl.: E02B 17/00, E02D 27/12, E02D 27/32, E02D 27/42, E02D 5/34

(54) **VERFAHREN ZUR VERANKERUNG EINER GRÜNDUNGSSTRUKTUR UND GRÜNDUNGSSTRUKTUR**
METHOD FOR ANCHORING A FOUNDATION STRUCTURE AND FOUNDATION STRUCTURE
PROCÉDÉ D'ANCRAGE D'UNE STRUCTURE DE FONDATION ET STRUCTURE DE FONDATION

(30) Priorität: 14.12.2012 DE 102012024412
(43) Veröffentlichungstag der Anmeldung: 27.09.2017
(62) Teilanmeldung aus: 13794810.5
(73) Patentinhaber: Siemens Gamesa Renewable Energy Service GmbH, 22297 Hamburg (DE)
(72) Erfinder: Seidel, Marc, 49082 Osnabrück (DE); Albrecht, Victor, 49082 Osnabrück (DE)
(74) Vertreter: Glawe, Delfs, Moll

(56) Entgegenhaltungen:
- DE-A1- 10 330 963
- GB-A- 1 497 080
- US-A1- 2005 286 979
- US-A1- 2011 138 731

## Beschreibung

Die Erfindung betrifft ein Verfahren zum Verankern einer Gründungsstruktur einer Windenergieanlage, insbesondere zum Verankern einer Gründungstruktur für eine Offshore-Windenergieanlage im Meeresboden, mit den Schritten: Einbringen von wenigstens einer Aufnahmestruktur in den Boden, insbesondere in den Meeresboden, Absenken wenigstens eines Tragpfostens der Gründungsstruktur in die wenigstens eine Aufnahmestruktur, Herstellen einer Verbindung zwischen Aufnahme- und Gründungsstruktur durch Verfüllen der Aufnahmestruktur mit einer aushärtbaren Füllmasse und Aushärten der aushärtbaren Füllmasse.

Die Erfindung betrifft weiterhin eine Gründungsstruktur insbesondere zur Verankerung im Meeresboden mit wenigstens einem in eine Aufnahmestruktur einzuführenden Tragpfosten.

Ein solches Verfahren findet unter anderem bei der Verankerung von Offshore-Windenergieanlagen auf dem Meeresboden Anwendung. Das Verfüllen der Aufnahmestruktur, z.B. gebildet von Hohlpfählen, mit einer abbindenden Füllmasse, z.B. ein Mörtel oder Beton, wird als Vergrouten bezeichnet. Dabei wird z.B. ein an der dem Meeresboden abgewandten Seite hohler Pfahl als Aufnahmestruktur in den Meeresboden eingebracht (z.B. gebohrt oder gerammt). Insbesondere auf felsigem Untergrund kann auch eine Bohrung als Aufnahmestruktur in den Untergrund eingebracht werden. Abhängig von der Größe der zu befestigenden Windenergieanlage sind unterschiedliche Gründungsstrukturen bekannt. Dies sind vor allem aus einem Tragpfosten bestehende sogenannte Monopiles, drei Tragpfosten aufweisende Tripods sowie drei oder mehr Tragpfosten (auch Eckstiele genannt) aufweisende sogenannte Jackets.

Da sich die Gründungsstruktur der Windenergieanlage während des Verankerungsverfahrens zum Teil unter Wasser und zum Teil über Wasser befindet, ist sie der Einwirkung des Wellengangs ausgesetzt. Für die Tragfähigkeit der Groutverbindung zwischen Aufnahmestruktur und Gründungsstruktur ist es jedoch entscheidend, dass während der Aushärtung der aushärtbaren Füllmasse (des Grouts), bei der es sich zumeist um hochfesten Beton handelt, keine oder nur geringe Relativbewegung zwischen der Aufnahmestruktur und z.B. dem in die Aufnahmestruktur eingesetzten Tragpfosten stattfindet. So wird z.B. in der WO 2011/010937 A1 eine maximale Bewegung von 3 mm als zulässig angegeben.

Die WO 2011/010937 A1 beschreibt ein Verfahren zum Verankern von mehreren Tragpfosten einer Struktur in mehreren aufnehmenden Pfählen, wobei die Tragpfosten mit Konsolen ausgestattet sind, welche sich beim Einführen der Tragpfosten in die Pfähle auf den Pfahlöffnungen abstützen. Um leichte Höhenunterschiede zwischen den Pfahlöffnungen benachbarter Pfähle abfangen zu können, sind an den Konsolen elastische Puffer vorgesehen. Durch diese Konstruktion soll verhindert werden, dass Gründungsstrukturen mit mehr als drei Tragpfosten störende und die Tragfestigkeit herabsetzende Kippbewegungen ausführen.

Aus der GB 1 497 080 A ist bekannt, fixierende Rippen einer Aufnahmestruktur an Schlitzen des Tragpfostens zu verschweißen.

Derzeit kann aufgrund der negativen Auswirkungen von Relativbewegungen in der Aushärtphase eine Verankerung von Gründungsstrukturen für Windenergieanlagen am Meeresboden nur bei ruhiger See ausgeführt werden. Dadurch kann sich die Verankerung teilweise erheblich verzögern, weil auf geeignete Bedingungen gewartet werden muss, und sie ist sogar in typischen Schlechtwetterperioden ganz unmöglich.

Es besteht daher eine Aufgabe der vorliegenden Erfindung darin, ein Verfahren zum Verankern einer Gründungsstruktur einer Windenergieanlage im Meeresboden bereit zu stellen, welches weniger wetterabhängig und weniger anfällig gegen Wellengang ist. Weiterhin besteht eine Aufgabe der Erfindung darin, eine Gründungsstruktur für eine Windenergieanlage zur Verankerung im Meeresboden bereitzustellen, welche für eine Verankerung nach einem weniger anfälligen Verfahren besonders geeignet ist.

Diese Aufgabe wird gemäß der Erfindung gelöst durch ein Verfahren zum Verankern einer Gründungsstruktur einer Windenergieanlage im Meeresboden mit den Schritten: Einbringen von wenigstens einer Aufnahmestruktur in den Meeresboden, Absenken wenigstens eines Tragpfostens der Gründungsstruktur in die wenigstens eine Aufnahmestruktur, Herstellen einer Verbindung zwischen Aufnahme- und Gründungsstruktur durch Verfüllen der Aufnahmestruktur mit einer aushärtbaren Füllmasse und Aushärten der aushärtbaren Füllmasse, wobei vor dem Verfüllen der Aufnahmestruktur mit der aushärtbaren Füllmasse der Tragpfosten stoffschlüssig in der Aufnahmestruktur fixiert wird, welches dadurch weitergebildet ist, dass die stoffschlüssige Fixierung mittels einer aushärtbaren Fixiermasse erfolgt.

Durch die Fixierung des Tragpfostens in der Aufnahmestruktur vor dem Verfüllen mit Grout werden Bewegungen des Tragpfostens relativ zur Aufnahmestruktur während des Aushärtens der aushärtbaren Füllmasse zuverlässig verhindert. Dabei kann die Fixierung so ausgelegt sein, dass Sie lediglich die bei normalem bis mittlerem Wellengang auftretenden Kräfte aufnehmen kann, nicht aber zur Aufnahme noch höherer Kräfte geeignet ausgebildet ist, wie dies von der endgültig verankerten Gründungsstruktur verlangt wird. Es wird gewissermaßen zunächst eine provisorische Fixierung vorgenommen, die die Herstellung der endgültigen Verbindung zwischen Aufnahmestruktur und Gründungsstruktur erleichtert.

Wenn die Fixierung gemäß einer besonderen Ausgestaltung der Erfindung mittels am Tragpfosten vorgesehener Fixierungselemente erfolgt, kann diese besonders einfach erfolgen.

Gemäß einer nicht erfindungsgemäßen Ausgestaltung sind die Fixierungselemente als elastische, schräg am Tragpfosten angestellte Fixierungselemente, z.B. Bleche ausgeführt. Diese sind bevorzugt in Richtung der Längsachse des Tragpfostens gegeneinander höhenversetzt. Die Bleche können nach Art einer Klinke in der Aufnahmestruktur verspannt werden. Unter elastischen Blechen werden im Sinne der Erfindung z.B. Bleche verstanden, die ohne eine bleibende Verformung relativ zum Tragpfosten ausgelenkt werden können. Dies kann über eine elastische Verformung der Bleche oder über eine vorgespannte bewegliche Befestigung erfolgen.

Gemäß einer nicht erfindungsgemäßen Ausgestaltung erfolgt die Fixierung mittels an der Aufnahmestruktur vorgesehener Fixierungselemente. Dies sind bevorzugt ringförmige Stahleinlagen. Besonders im Zusammenwirken mit am Tragpfosten vorgesehenen Fixierungselementen lässt sich so eine sehr zuverlässige Fixierung bewirken.

In einer bevorzugten nicht erfindunggemäßen Weiterbildung wird zum Fixieren eine entgegen der Absenkrichtung des Tragpfostens wirkende Zugkraft auf den Tragpfosten aufgebracht, bevorzugt über zwischen einer Oberkante der Aufnahmestruktur und einer an dem Tragpfosten vorgesehenen Konsole mit der Funktion einer Stopperplatte eingebrachte Spannkeile. Dadurch werden die Fixierungselemente fest gegeneinander oder gegen den Tragpfosten oder gegen die Aufnahmestruktur verspannt und die Fixierung wird besonders sicher.

Gemäß dem erfindungsgemäßen Verfahren wird der Tragpfosten vor dem endgültigen Verfüllen stoffschlüssig in der Aufnahmestruktur fixiert. Dies erfolgt mittels einer aushärtbaren Fixiermasse, insbesondere eines schnell aushärtenden Klebers oder Mörtels. Eine solche stoffschlüssige Fixierung ist mit besonders einfachen Mitteln herstellbar. Diese Fixiermasse kann z.B. gegenüber der später in die Aufnahmestruktur einzufüllenden Füllmasse eine kürzere Zeit zur Erlangung der geforderten Festigkeit (Abbindezeit) und eine geringere Tragfähigkeit aufweisen. Es kann im Prinzip aber auch in beiden Verfahrensschritten die gleiche Masse verwendet werden, wobei zwischen den beiden Verfüllschritten auf jeden Fall eine Aushärtphase einzuhalten ist.

Gemäß einer Weiterbildung dieses erfindungsgemäßen Verfahrens wird die Fixierung von am Tragpfosten vorgesehenen Ankerelementen unterstützt, die nach dem Einfüllen der aushärtbaren Fixiermasse in dieser eingebettet sind. Somit kann zusätzlich zu dem Stoffschluss ein Formschluss vorläufig zwischen der Aufnahme- und der Gründungsstruktur hergestellt werden, wodurch die Zuverlässigkeit der vorläufigen Fixierung weiter erhöht wird.

Grundsätzlich wird die Tragfestigkeit von mittels aushärtender Füll- oder Fixiermassen hergestellter stoffschlüssiger Verbindungen durch während der Aushärtung stattfindende Bewegungen reduziert. Dies kann jedoch für das erfindungsgemäße Verfahren in gewissem Maße toleriert werden, da die ausgehärtete Fixiermasse nur die während der Aushärtung der aushärtbaren Füllmasse auftretenden Kräfte aufnehmen muss. Es reicht aus, dass in dem erfindungsgemäßen Verfahren Bewegungen des Tragpfostens in der Aufnahmestruktur während des Aushärtens der aushärtbaren Füllmasse vermindert werden. Die erforderliche Druckfestigkeit und Tragfähigkeit erhält die erfindungsgemäß hergestellte Verankerung nach dem Aushärten wie auch bisher schon im Stand der Technik durch die Füllmasse, wobei die Fixiermasse dazu einen Beitrag leisten kann, aber nicht muss.

Die Fixiermasse fixiert das untere freie Ende des Tragpfostens, der sich also noch in seinem unfixierten Bereich in der Aufnahmestruktur verschieben kann. Dies kann mit Vorteil noch dadurch vermieden werden, dass gemäß weiterer vorteilhafter Ausgestaltungen der Erfindung am Tragpfosten sich radial erstreckende Fahnenbleche angeordnet sind. Diese Fahnenbleche sind in einem Höhenbereich am Tragpfosten angeordnet, der im eingesetzten Zustand innerhalb der Aufnahmestruktur liegt, aber oberhalb des in der Fixiermasse eingebetteten Tragpfostenbereiches. In Alternative dazu oder zusätzlich kann der Tragpfosten eine Konsole als Stopperplatte aufweisen, die im eingesetzten Zustand auf dem oberen Ende der Aufnahmestruktur reibschlüssig aufliegt.

Die Aufgabe wird weiterhin gelöst durch eine Gründungsstruktur für eine Windenergieanlage zur Verankerung im Meeresboden gemäß Anspruch 7 mit wenigstens einem in eine Aufnahmestruktur einzuführenden Tragpfosten, welche dadurch weitergebildet ist, dass der Tragpfosten Fixierungselemente zur Fixierung in der Aufnahmestruktur aufweist.

Bezüglich weiterer vorteilhafter Ausgestaltungen der Erfindung wird zur Vermeidung von Wiederholungen auf das oben gesagte und die Unteransprüche verwiesen.

Die Erfindung wird nachstehend anhand einiger in den Figuren schematisch und nicht maßstabgerecht dargestellter Ausführungsbeispiele näher erläutert. Es zeigen:
- Fig. 1:: eine schematische Darstellung einer Verankerung einer Windenergieanlage im Meeresboden;
- Fig. 2:: eine schematische Darstellung einer nach einem beispielhaften Verfahren herzustellenden Verankerung; und
- Fig. 3:: eine schematische Darstellung einer nach einem Verfahren gemäß einer Ausgestaltung der Erfindung herzustellenden Verankerung.

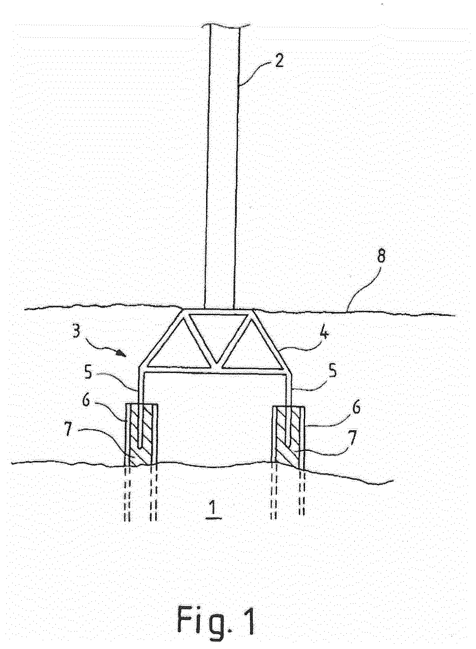

Figur 1 zeigt in einer schematischen Darstellung eine gattungsgemäße Anordnung zur Verankerung einer Offshore-Windenergieanlage im Meeresboden 1. Der Rohrturm 2 der ansonsten nicht dargestellten Windenergieanlage ist auf einer gitterförmigen Gründungsstruktur 3 errichtet. Diese Gründungsstruktur 3 besteht aus einem Gittergerüstkörper 4 und mehreren Tragpfosten 5, die sich in vertikaler Richtung nach unten erstrecken. Abhängig von der Größe der Windenergieanlage kann die Gründungsstruktur als Monopile mit einem Tragpfosten, als Tripod mit drei Tragpfosten oder als Jacket mit drei oder mehr Tragpfosten ausgeführt sein. Im dargestellten Ausführungsbeispiel ist die Gründungsstruktur 3 als Jacket mit vier Tragpfosten 5 ausgeführt, von denen aus Gründen der Übersichtlichkeit nur zwei dargestellt sind. Bei einer Ausführung als Monopile würde der Gerüstkörper 4 entfallen, so dass die Gründungsstruktur lediglich aus dem Tragpfosten selbst bestünde.

Um die Gründungsstruktur 3 im Meeresboden 1 zu verankern sind die Tragpfosten 5 mit ihren freien Enden in Aufnahmestrukturen eingeführt, die im dargestellten Beispiel als hohle Gründungspfähle 6 ausgeführt sind. Diese Gründungspfähle 6 sind in den Meeresboden 1 eingesenkt, dies kann je nach Beschaffenheit des Meeresbodens 1 beispielsweise durch Rammen oder Bohren erfolgen. Insbesondere bei sehr felsigem Meeresboden 1 können an Stelle der Gründungspfähle nicht dargestellte Bohrungen als Aufnahmestruktur in den Boden eingebracht werden.

Um die im Betrieb der Windenergieanlage auftretenden Kräfte aufnehmen zu können, wird nach dem Einführen der Tragpfosten 5 in die Aufnahmestrukturen 6 der dazwischen verbleibende Ringspalt mit einer aushärtbaren Füllmasse 7 verfüllt, welche dann ausgehärtet wird. Dieser Vorgang wird als Vergrauten bezeichnet. Als aushärtbare Füllmasse wird hauptsächlich hochfester Beton verwendet, welcher während der Montage von einem nicht dargestellten Montageschiff aus über eine Groutleitung in die Aufnahmestruktur 6 gepumpt wird.

Die Gründungsstruktur 3 befindet sich teilweise oberhalb und teilweise unterhalb der Wasseroberfläche 8. Während des mehrere Stunden bis Tage dauernden Aushärtens des Betons dürfen sich die Tragpfosten 5 der Gründungsstruktur 3 nicht sehr stark bewegen, da sonst die Festigkeit des Betons beeinträchtigt wird. Bei starkem Seegang kann nach dem Stand der Technik nicht gewährleistet werden, dass keine starken Bewegungen auftreten. Die Bewegungen werden überwiegend durch Wellenbewegungen in die Gründungsstruktur induziert.

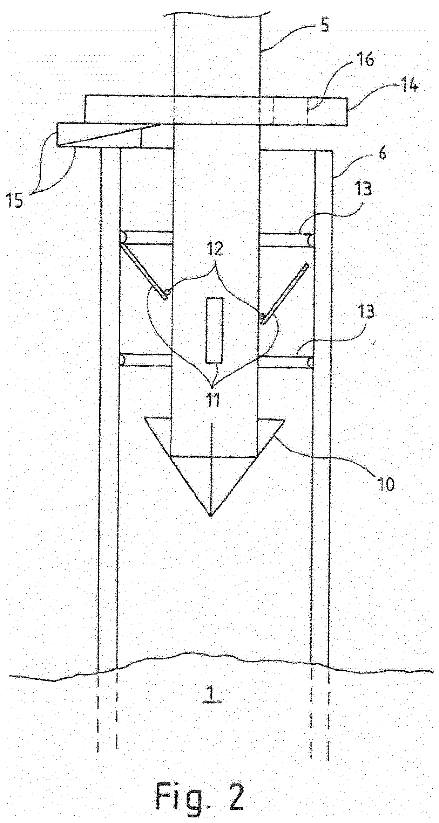

In Figur 2 ist in einer schematischen Ansicht eine Verankerungsanordnung für eine Gründungsstruktur für eine Windenergieanlage dargestellt, bei welcher Bewegungen des Tragpfostens 5 während des Aushärtens nicht oder zumindest nicht mehr im bisherigen Maße auftreten können. Es ist wiederum eine als hohler Gründungspfahl 6 ausgeführte Aufnahmestruktur dargestellt, welche im Meeresboden 1 eingesenkt ist. In den Gründungspfahl 6 ist ein Tragpfosten 5 der in dieser Darstellung der Figur 2 nicht weiter gezeigten Gründungsstruktur eingeführt.

Am freien Ende des Tragpfostens 5 sind Fahnenbleche 10 angeordnet. Diese Fahnenbleche dienen zum Einen zum leichteren Einführen des Tragpfostens 5 in den Gründungspfahl 6, zum Anderen stellen sie einen Mindestabstand zwischen Tragpfosten 5 und Gründungspfahl 6 in allen Richtungen sicher, der für eine feste Vergroutung notwendig ist.

Am Umfang des Tragpfostens 5 sind mehrere Fixierungselemente in Form von schräg angestellten Blechen 11 mittels vorgespannter beweglicher Befestigungen 12 angebracht. Die Vorspannung ist dabei so gewählt, dass die Bleche nach außen in Richtung der Innenwandung des Gründungspfahls gedrückt werden. Die Bleche 11 sind in Längsrichtung des Tragpfostens 5 gegeneinander höhenversetzt angeordnet. Anstelle einer Vorspannung können die Befestigungen auch so ausgeführt sein, dass die Bleche 11 durch ihr Eigengewicht nach außen kippen.

An der Innenwandung des Gründungspfahls 6 sind ebenfalls Fixierelemente in Form von ringförmigen Stahleinlagen 13 vorgesehen. Diese Stahleinlagen 13 sind mit dem Gründungspfahl auf geeignete Weise verbunden, z.B. durch Schweißung. Als Stahleinlagen 13 können auch die im Stand der Technik bekannten Schubrippen (shear keys) dienen, die zur Erreichung der Tragfestigkeit der Groutverbindung eingesetzt werden können.

Wenn der Tragpfosten 5 nach unten in den Gründungspfahl 6 abgesenkt wird, gleiten die Bleche 11 an der Innenwandung des Gründungspfahles 6 entlang und über die Stahleinlagen 13 hinweg. Sobald der Tragpfosten seine Sollposition erreicht hat, kann eine entgegen der Absenkrichtung wirkende Zugkraft auf den Tragpfosten 5 ausgeübt werden. Hierzu werden zwischen dem oberen Ende des Gründungspfahls 6 und einer am Tragpfosten 5 befestigten Konsole mit der Funktion einer Stopperplatte 14 Spannkeile 15 eingepresst. Durch die nach oben wirkende Zugkraft fassen die Bleche 11 hinter die Stahleinlagen 13, so dass der Tragpfosten 5 fest in dem Gründungspfahl 6 verspannt wird und sich unter Einfluss der durch normalen Seegang auf die Gründungsstruktur 3 einwirkenden Kräfte nicht oder kaum noch bewegen kann.

Prinzipiell kann auf die Stahleinlagen 13 verzichtet werden, wenn die Bleche 11 so ausgeführt sind, dass sie sich an dem Gründungspfahl 6 selbsthemmend verspannen. Wird die Gründungsstruktur 3 anstelle von Gründungspfählen 6 in Grundbohrungen verankert, so entfallen die Stahleinlagen 13 zwangsläufig. Hier verspannen sich die Bleche 11 zumeist ohne Schwierigkeiten an Unebenheiten der Bohrungsinnenwand.

Anschließend wird durch eine in der Konsole mit der Funktion einer Stopperplatte 14 vorgesehene Öffnung 16 eine Groutleitung verlegt oder eine bereits vorinstallierte Groutleitung genutzt, durch welche dann die Füllmasse (z.B. Beton) in das Innere des Gründungspfahls 6 gepumpt wird. Diese kann in Ruhe bis zum Erreichen der gewünschten Festigkeit aushärten.

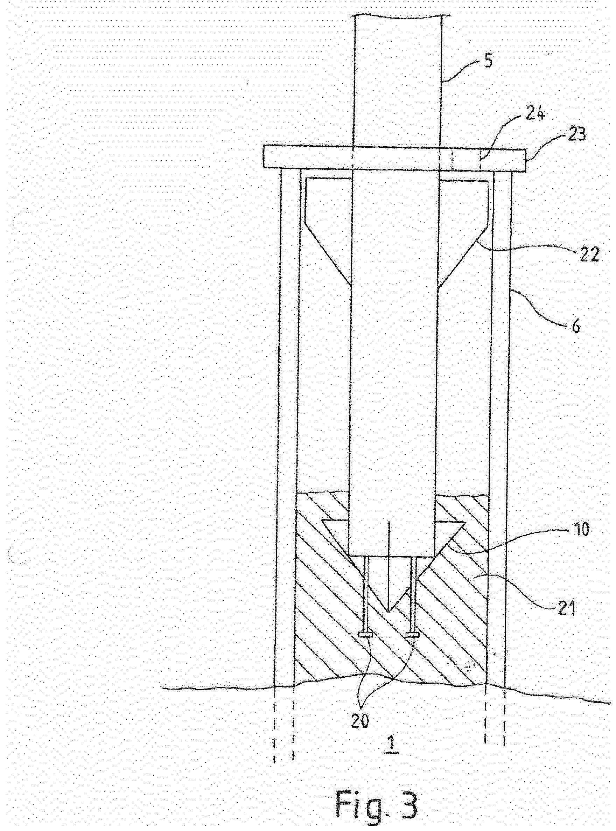

In Figur 3 ist eine erfindungsgemäße Verankerungsanordnung dargestellt, wobei in den Figuren 2 und 3 entsprechende Elemente mit gleichen Bezugszeichen versehen sind.

Wiederum ist ein Gründungspfahl 6 dargestellt, der in den Meeresboden 1 eingesenkt ist. In den Gründungspfahl 6 ist ein Tragpfosten 5 abgesenkt. An der Unterseite des Tragpfostens 5 sind neben den üblichen Fahnenblechen 10 Ankerelemente 20 befestigt. Dies können z.B. ausreichend lange Montageschrauben 20 sein, welche mit nach unten weisendem Schraubenkopf in die Stirnseite des Tragpfostens 5 eingeschraubt sind.

Nach dem Absenken des Tragpfostens 5 in den Gründungspfahl 6 wird in Abweichung von dem zu Figur 2 beschriebenen Verfahren eine schnell aushärtende Fixiermasse 21 in den unteren Bereich des Innenraums des Gründungspfahls 6 gepumpt. Bei dieser Fixiermasse kann es sich z.B. um schnell abbindenden Mörtel handeln, es kommen aber auch Kleber wie Epoxy-Kleber oder Cyanacrylat in Betracht. Entscheidend ist, dass die schnell aushärtende Fixiermasse in kurzer Zeit das untere Ende des Tragpfostens 5 mit ausreichender Festigkeit fixiert. Die in Figur 3 dargestellte Einfüllhöhe der Fixiermasse 21 ist nur beispielhaft gewählt. Sollte die benötigte Festigkeit es z.B. erfordern, dass die annähernd komplette Länge des in den Gründungspfahl 6 abgesenkten Tragpfosten 5 mit der Füllmasse verfüllt wird, so kann die Fixiermasse 21 nur so weit aufgefüllt werden, dass lediglich die Ankerelemente 20 in der Fixiermasse 21 eingebettet sind.

Da für diese Fixierung keine sehr hohe Dauerfestigkeit erforderlich ist können Bewegungen des Tragpfostens 5 während des Aushärtens toleriert werden. Trotzdem sind zur Verminderung solcher Bewegungen weitere Fahnenbleche 22 sowie eine Kopfplatte 23 an dem Tragpfosten 5 befestigt, welche durch Reibung auf dem oberen Ende des Gründungspfahls 6 bewegungshemmend wirkt. Diese Fahnenbleche 22 und/oder die Kopfplatte 23 könnten mit Vorteil auch bei dem Ausführungsbeispiel der Figur 2 vorgesehen werden.

In der Kopfplatte 23 ist wiederum eine Öffnung 24 vorgesehen, durch welche zum Einbringen der schnell abbindenden Fixiermasse 21 und später der Füllmasse (z.B. Beton) eine Groutleitung verlegt werden kann.

Nach dem Aushärten der schnell aushärtenden Fixiermasse 21 wird der Gründungspfahl 6 wiederum mit Füllmasse (z.B. Beton) verfüllt, der in Ruhe zu voller Festigkeit aushärten kann.

## Patentansprüche

1. Verfahren zum Verankern einer Gründungsstruktur (3) im Meeresboden (1) mit den Schritten: Einbringen von wenigstens einer Aufnahmestruktur (6) in den Meeresboden, Absenken wenigstens eines Tragpfostens (5) der Gründungsstruktur (3) in die wenigstens eine Aufnahmestruktur (6), Herstellen einer Verbindung zwischen Aufnahmestruktur (6) und Gründungsstruktur (3) durch Verfüllen der Aufnahmestruktur (6) mit einer aushärtbaren Füllmasse (7) und Aushärten der aushärtbaren Füllmasse (7), wobei vor dem Verfüllen der Aufnahmestruktur (6) mit der aushärtbaren Füllmasse (7) der Tragpfosten (5) stoffschlüssig in der Aufnahmestruktur (6) fixiert wird, **dadurch gekennzeichnet, dass** die stoffschlüssige Fixierung mittels einer aushärtbaren Fixiermasse (21) erfolgt.

2. Verfahren nach Anspruch 1, **dadurch gekennzeichnet, dass** die stoffschlüssige Fixierung mittels eines schnell aushärtenden Klebers oder Mörtels erfolgt.

3. Verfahren nach einem der vorhergehenden Ansprüche, **dadurch gekennzeichnet, dass** am Tragpfosten (5) Ankerelemente (20) angeordnet werden, die nach dem Einfüllen der aushärtbaren Fixiermasse (21) in dieser eingebettet sind.

4. Verfahren nach einem der vorhergehenden Ansprüche, **dadurch gekennzeichnet, dass** Bewegungen des Tragpfostens (5) in der Aufnahmestruktur (6) während des Aushärtens der Fixiermasse (21) durch Fixiermittel vermindert werden.

5. Verfahren nach Anspruch 4, **dadurch gekennzeichnet, dass** Bewegungen des Tragpfostens (5) mittels am Tragpfosten (5) vorgesehener Fahnenbleche (22) als Fixiermittel vermindert werden.

6. Verfahren nach Anspruch 4 oder 5, **dadurch gekennzeichnet, dass** Bewegungen des Tragpfostens (5) mittels einer am Tragpfosten (5) vorgesehenen, auf dem oberen Ende der Aufnahmestruktur (6) reibschlüssig aufliegenden Kopfplatte (23) als Fixiermittel vermindert werden.

7. Gründungsstruktur (3) insbesondere für eine Offshore-Windenergieanlage zur Verankerung im Meeresboden (1) mit wenigstens einem in eine Aufnahmestruktur (6) einzuführenden und dort mittels eines Groutings als Füllmasse (7) zu halternden Tragpfosten (5), **dadurch gekennzeichnet, dass** der Tragpfosten (5) Fixierungselemente zur vorübergehenden stoffschlüssigen Fixierung mittels einer aushärtenden Fixiermasse in der Aufnahmestruktur (6) vor Ausführen des Groutings aufweist.

8. Gründungsstruktur nach Anspruch 7, **dadurch gekennzeichnet, dass** eine Kopfplatte (23) an dem Tragpfosten (5) vorgesehen ist.

## Claims

1. Method for anchoring a foundation structure (3) in the seabed (1), comprising the following steps: introducing at least one receiving structure (6) into the seabed, lowering at least one support post (5) of the foundation structure (3) into the at least one receiving structure (6), producing a connection between the receiving structure (6) and foundation structure (3) by filling the receiving structure (6) with a curable filling compound (7), and curing the curable filling compound (7), wherein the support post (5) is fixed in the receiving structure (6) in an integrally bonded manner prior to filling the receiving structure (6) with the curable filling compound (7), **characterized in that** the integrally bonded fixing is achieved by means of a curable fixing compound (21).

2. Method according to Claim 1, **characterized in that** the integrally bonded fixing is achieved by means of a quick-curing adhesive or mortar.

3. Method according to either of the preceding claims, **characterized in that** the support post (5) has arranged thereon anchor elements (20) which, after introducing the curable fixing compound (21), are embedded therein.

4. Method according to one of the preceding claims, **characterized in that** movements of the support post (5) in the receiving structure (6) during the curing of the fixing compound (21) are reduced by fixing means.

5. Method according to Claim 4, **characterized in that** movements of the support post (5) are reduced by means of lug plates (22) provided on the support post (5) as fixing means.

6. Method according to Claim 4 or 5, **characterized in that** movements of the support post (5) are reduced by means of a head plate (23) as fixing means which is provided on the support post (5) and lies frictionally on the upper end of the receiving structure (6).

7. Foundation structure (3), in particular for an offshore wind turbine, for anchoring in the seabed (1), comprising at least one support post (5) to be introduced into a receiving structure (6) and to be held there by means of grouting as filling compound (7), **characterized in that** the support post (5) has fixing elements for temporary integrally bonded fixing by means of a curing fixing compound in the receiving structure (6) prior to carrying out the grouting.

8. Foundation structure according to Claim 7, **characterized in that** a head plate (23) is provided on the support post (5).

## Revendications

1. Procédé d'ancrage d'une structure de fondation (3) dans le fond sous-marin (1), le procédé présentant les étapes suivantes :
placement d'au moins une structure de réception (6) dans le fond sous-marin,
descente d'au moins un mât de support (5) de la structure de fondation (3) dans la ou les structures de réception (6),
établissement d'une liaison entre la structure de réception (6) et la structure de fondation (3) par remplissage de la structure de réception (6) d'une pâte de charge durcissable (7) et durcissement de la pâte de charge durcissable (7),
le mât de support (5) étant immobilisé en correspondance de matière dans la structure de réception (6) avant le remplissage de la structure de réception (6) par la pâte de charge durcissable (7),
**caractérisé en ce que**
la fixation en correspondance de matière s'effectue au moyen d'une pâte de fixation (21) durcissable.

2. Procédé selon la revendication 1, **caractérisé en ce que** la fixation en correspondance de matière s'effectue au moyen d'un adhésif ou mortier à prise rapide.

3. Procédé selon l'une des revendications précédentes, **caractérisé en ce que** des éléments d'ancrage (20) incorporés dans la pâte de fixation (21) durcissable après placement de cette dernière sont disposés sur le mât de support (5).

4. Procédé selon l'une des revendications précédentes, **caractérisé en ce que** les mouvements du mât de support (5) dans la structure de réception (6) pendant la prise de la pâte de fixation (21) durcissable sont diminués à l'aide de moyens de fixation.

5. Procédé selon la revendication 4, **caractérisé en ce que** les mouvements du mât de support (5) sont diminués à l'aide de plaques de drapeau (22) prévues sur le mât de support (5) en tant que moyens de fixation.

6. Procédé selon les revendications 4 ou 5, **caractérisé en ce que** les mouvements du mât de support (5) sont diminués à l'aide d'une plaque de tête (23) prévue sur le mât de support (5) en tant que moyen de fixation et reposant en correspondance de frottement à l'extrémité supérieure de la structure de réception (6).

7. Structure de fondation (3), en particulier pour éolienne Offshore, destinée à l'ancrage dans le fond sous-marin (1) et présentant au moins un mât de support (5) qui doit être inséré dans une structure de réception (6) et qui y est retenu au moyen d'un scellement sous la forme d'une pâte de charge durcissable (7),
**caractérisé en ce que**
le mât de support (5) présente des éléments de fixation permettant avant la réalisation du scellement une fixation temporaire en correspondance de matière dans la structure de réception (6) au moyen d'une pâte de fixation durcissable.

8. Structure de fondation selon la revendication 7, **caractérisé en ce qu'**une plaque de tête (23) est prévue sur le mât de support (5).
